# EUROPÄISCHE PATENTANMELDUNG

(11) **EP 3 366 534 A1**
(43) Veröffentlichungstag der Anmeldung: **29.08.2018**
(21) Anmeldenummer: 17158352.9
(22) Anmeldetag: 28.02.2017
(51) Int. Cl.: B60T 8/42

(54) **AKTUATOR FÜR EIN ABS-SYSTEM MIT HYDRAULIK-BYPASS**

(71) Anmelder: Brake Force One GmbH, 72074 Tübingen (DE)
(72) Erfinder: LAUHOFF, Jakob, 72070 Tübingen (DE)
(74) Vertreter: Kohler Schmid Möbus Patentanwälte

(57) **Zusammenfassung**

Die Erfindung betrifft einen Aktuator (100) für ein ABS-System, insbesondere für ein Zweirad, mit einem zumindest bereichsweise ferromagnetischen Gehäuse (101), in dem ein Anker (105) in einem ein Hydraulikmedium aufweisenden Ankerraum (104a) bewegbar angeordnet ist, wobei zusätzlich zum Ankerraum (104a) und außerhalb des Ankers (105) zumindest ein Hydraulikkanal (131) vorgesehen ist, der einen Hydraulikmediumtransport am Anker (105) vorbei erlaubt.

## Beschreibung

Die Erfindung betrifft einen Aktuator für ein ABS-System, insbesondere für ein Zweirad, mit einem zumindest bereichsweise ferromagnetischen Gehäuse, in dem ein Anker in einem ein Hydraulikmedium aufweisenden Ankerraum bewegbar angeordnet ist.

Ein derartiger Aktuator ist beispielsweise aus der nicht veröffentlichten deutschen Patentanmeldung DE 10 2016 119 666 bekannt geworden.

Bei der bekannten Anordnung wird ein magnetischer Luftspalt durch eine Führungshülse, ein Führungsspiel zwischen Führungshülse und Anker sowie gegebenenfalls Rillen im Anker realisiert. Es hat sich gezeigt, dass ein solcher Luftspalt nicht ausreichend ist, um Hydraulikmedium ausreichend schnell von einer Seite des Ankers auf die andere Seite des Ankers transportieren zu können. Ist es nicht möglich, Hydraulikmedium von einem Ende des Ankers schnell genug in den Bereich des anderen Endes des Ankers zu transportieren, wirkt der Anker wie ein Dämpfer im System. Eine zuverlässige Bremsleistung des ABS-Systems ist somit nicht mehr gewährleistet.

Wird jedoch ein größerer Luftspalt vorgesehen, so reduziert sich der Wirkungsgrad des Hubmagneten.

Aufgabe der vorliegenden Erfindung ist es daher, einen Aktuator dahingehend weiterzubilden, dass zum einen ein möglichst hoher Wirkungsgrad des Hubmagneten bestehen bleibt und zum anderen eine ausreichend große Menge Hydraulikmedium schnell genug am Anker vorbei transportiert werden kann.

Gelöst wird diese Aufgabe erfindungsgemäß durch einen Aktuator für ein ABS-System, insbesondere für ein Zweirad, mit einem zumindest bereichsweise ferromagnetischen Gehäuse, in dem ein Anker in einem ein Hydraulikmedium aufweisenden Ankerraum bewegbar angeordnet ist, wobei zusätzlich zum Ankerraum und außerhalb des Ankers zumindest ein Hydraulikkanal vorgesehen ist, der einen Hydraulikmediumtransport am Anker vorbei erlaubt.

Durch diese Maßnahme ist es möglich, eine ausreichende Menge von Hydraulikmedium schnell genug am Anker vorbei zu transportieren, ohne dass dadurch die Bewegung des Ankers gedämpft wird. Durch den Hydraulikkanal wird dem Hydraulikmedium ein größerer Durchflussquerschnitt bereitgestellt. Andererseits hat das Vorsehen eines Hydraulikkanals außerhalb des Ankerraums keine negativen Auswirkungen auf den Wirkungsgrad des Hubmagneten.

Vorzugsweise verläuft der Hydraulikkanal zumindest abschnittsweise parallel zum Ankerraum. Dadurch kann die Länge des Hydraulikkanals relativ kurz gehalten werden.

Besondere Vorteile ergeben sich, wenn der Hydraulikkanal zumindest abschnittsweise in einer Gehäusewandung verläuft. Die Gehäusewandung ist üblicherweise ausreichend dick, um hierin noch einen Hydraulikkanal vorsehen zu können. Dadurch, dass der Hydraulikkanal in der Gehäusewandung geführt ist, kann der Ankerraum im Wesentlichen unverändert bleiben. Insbesondere kann der Luftspalt im Bereich des Ankerraums gering gehalten werden.

Gemäß einer Ausführungsform kann eine ferromagnetische Innenwand mit einer Durchgangsöffnung für den Anker vorgesehen sein. Über diese Innenwand ist es möglich, einen magnetischen Kreis zu schließen.

Besonders bevorzugt ist es, wenn der Hydraulikkanal im Bereich der Innenwand angeordnet ist. Insbesondere im Bereich der Innenwand, die den magnetischen Kreis schließt, ist es wichtig, einen geringen Luftspalt zu realisieren. Es ist daher besonders vorteilhaft, wenn in diesem Bereich der Hydraulikkanal vorgesehen ist, sodass im Bereich der Innenwand ein sehr kleiner Luftspalt realisiert werden kann. Die Innenwand kann mit dem restlichen Gehäuse einstückig ausgebildet sein. Sie kann aber auch als in das restliche Gehäuse eingesetzte Scheibe ausgebildet sein. Die Dicke der Scheibe kann im Bereich von 3 - 7 mm liegen. Vorzugsweise ist sie ca. 5 mm dick.

Dabei kann vorgesehen sein, dass die Innenwand zumindest eine weitere Durchgangsöffnung aufweist, die zumindest einen Abschnitt des Hydraulikkanals darstellt. Somit kann die Innenwand eine oder mehrere Durchgangsöffnungen zusätzlich zu der Durchgangsöffnung für den Anker aufweisen, durch die hindurch Hydraulikmedium transportiert werden kann. Vorzugsweise weist die Innenwand mehrere, insbesondere gleichmäßig verteilte, Durchgangsöffnungen auf. Somit kann über den Umfang verteilt gleichmäßig Hydraulikmedium transportiert werden.

Der Durchmesser des Hydraulikkanals, insbesondere der Durchgangsöffnungen, kann größer sein als der Durchmesser eines Hydraulikanschlusses des Gehäuses und/oder einer zum Gehäuse führenden Hydraulikleitung.

Der Hydraulikkanal kann Leitungsabschnitte aufweisen, die in den Ankerraum münden. Somit kann Hydraulikflüssigkeit vom Ankerraum in den Hydraulikkanal geführt werden und am Ankerraum vorbeigeführt werden. Insbesondere können die Leitungsabschnitte beidseits der Innenwand in den Ankerraum münden. Somit ist es möglich, im Bereich der Innenwand Hydraulikmedium aus dem Ankerraum abzuzweigen, parallel zum Ankerraum zu führen und dann wieder in den Ankerraum einzuleiten.

Besondere Vorteile ergeben sich, wenn der Anker von Hydraulikmedium umströmbar im Ankerraum angeordnet ist. Als Hydraulikmedium kann insbesondere Glykol-H₂O vorgesehen sein. Dieses Hydraulikmedium weist eine besonders geeignete Viskosität auf. Außerdem ist es unbedenklich hinsichtlich seiner Umweltverträglichkeit.

Der Anker kann im Ankerraum geführt sein. Das Hydraulikmedium kann eine Schmierung des Ankers bewirken, sodass sie verschleiß- und reibungsarm im Ankerraum bewegbar ist. Insbesondere kann zumindest ein Teil des Hydraulikmediums über das Führungsspiel zwischen dem Anker und dem Ankerraum durchgeführt sein. Dabei kann der Anker im Ankerraum von Hydraulikmedium umspült sein.

Der Anker kann zumindest eine sich vorzugsweise in Längsrichtung des Ankers erstreckende Durchgangsöffnung aufweisen, die einen zusätzlichen Hydraulikkanal darstellt. Somit kann Hydraulikmedium vom Hydraulikeingang des Druckmodulators zum Hydraulikausgang des Druckmodulators nicht nur im Ankerraum und im Hydraulikkanal transportiert werden, sondern auch durch den Anker hindurch.

Weiterhin kann vorgesehen sein, dass der Anker zumindest eine Hydraulikausnehmung, einen polygonförmigen Querschnitt und/oder Abflachungen aufweist, insbesondere in seiner Mantelfläche zumindest eine sich in Längsrichtung des Ankers oder wendelförmig erstreckende Rille aufweist. Somit kann Hydraulikmedium über die Rille entlang des Ankers fließen.

Gemäß einer Ausgestaltung der Erfindung kann ein gegen eine Rückstellkraft zu öffnender Volumenspeicher vorgesehen sein, der bei einer aktivierten Antiblockierfunktion das Volumen der hydraulischen Leitung vergrößert, wobei ein Linearantrieb, insbesondere Proportionalmagnet und/oder Hubmagnet, mit dem Anker vorgesehen ist und eine Verfahrbewegung des Ankers das Öffnen des Volumenspeichers bewirkt. Wird demnach das Blockieren eines Rads detektiert, so kann der Anker, insbesondere gegen die Rückstellkraft eines Rückstellelements, bewegt werden und damit einen Volumenspeicher schaffen oder öffnen, in den Hydraulikmedium fließen kann. Dadurch wird der Druck des Hydraulikmediums reduziert und somit der Druck auf die Bremsbacken einer Bremszange reduziert, sodass sich das Rad wieder drehen kann.

Weitere Merkmale und Vorteile der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt sowie aus den Ansprüchen. Die dort gezeigten Merkmale sind nicht nur notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: einen Druckmodulator in einer Längsschnittdarstellung;
- Fig. 2: ein Detail A der Fig. 1;
- Fig. 3: im Wesentlichen nochmals das Detail A der Fig. 1 in einer perspektivischen Darstellung.

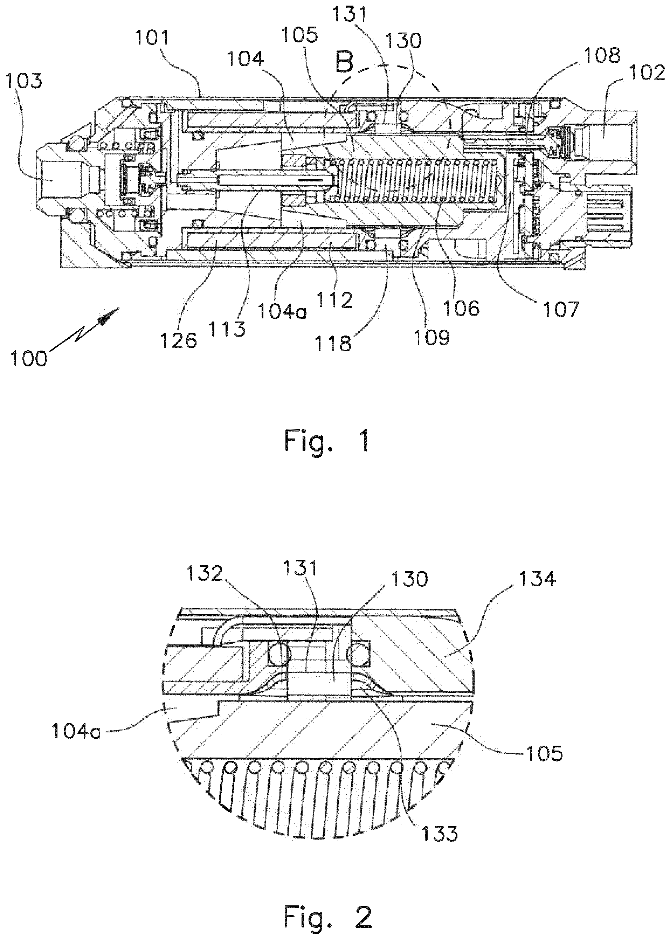

Die Fig. 1 zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104 im Inneren des Gehäuses 101 miteinander verbunden.

Die hydraulischen Ein- und Ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein Anker 105 aus Stahl oder einem Sondermaterial in einer in der Fig. 1 gezeigten Nullstellung. Der Anker 105 ist in einem Ankerraum 104a, der Teil der Hydraulikleitung 104 ist, bewegbar angeordnet und in der gezeigten Stellung aufgrund der Federkraft des Federelements 106 nach rechts bewegt, sodass er an einer Gehäusewand 107 anliegt. In dieser Stellung drückt der Anker 105 gegen ein Ventilelement 108, sodass dieses geöffnet ist und Hydraulikmedium das Ventil durchströmen kann. Das Hydraulikmedium kann dann im Ankerraum 104a weiterhin entlang eines Spalts zwischen der Mantelfläche des Ankers 105 und der Gehäusewand 109 zum Hydraulikausgang 103 fließen.

Das Gehäuse 101 weist eine Innenwand 118 mit einer Durchgangsöffnung auf, durch die der Anker 105 ragt. Die Innenwand 118 ist aus ferromagnetischem Material ausgebildet und kann ein separates Teil sein.

Bei aktivierter Antiblockierfunktion wird ein Linearantrieb, insbesondere Hubmagnet oder Proportionalmagnet 126 aktiviert, der den Anker 105 entgegen der Federkraft des Federelements 106 bewegt. Dadurch wird das Volumen der Hydraulikleitung 104 zwischen der Gehäusewand 107 und dem Anker 105 vergrößert, sodass der durch das Hydraulikmedium auf eine Radbremse ausgeübte Druck geringer wird und die Radbremse geöffnet wird. Das Verschieben des Ankers 105 nach links hat weiterhin den Effekt, dass das Ventilelement 108 nach links bewegt wird und somit das Ventil verschließt. Ein Geberzylinder im Bereich einer Bremsbetätigungsvorrichtung ist somit von der Radbremse abgekoppelt.

Der Proportionalmagnet 126 weist eine zylinderförmige Spulenanordnung 112 auf, durch die der Anker 105 angezogen werden kann. An einem Spulenkörper können Zapfen angeformt sein, die die Innenwand 118 durchragen. Sie sorgen für eine Positionierung und Ausrichtung der Innenwand 118. Außerdem ermöglichen sie das Wickeln der Spule im vormontierten Zustand.

Das Federelement 106 stützt sich einenends an dem Anker 105 und anderenends an einem nicht magnetischen Steuerkolben 113 ab, der fest mit dem Gehäuse 101 verbunden ist. Das Federelement 106 stützt sich somit mittelbar über den Steuerkolben 113 am Gehäuse 101, das zumindest im Bereich der Spulenanordnung 112 magnetisch leitend, insbesondere ferromagnetisch, ausgebildet ist, ab.

Die Innenwand 118 weist entlang ihres Umfangs Durchgangsöffnungen 130 auf, die einen Abschnitt von Hydraulikkanälen 131 bilden. Die Durchgangsöffnungen 130 verlaufen parallel zum Ankerraum 104a. Sie sind außerhalb des Ankers 105 angeordnet und insbesondere im Bereich des Gehäuses 101 angeordnet. Die Hydraulikkanäle 131 stellen quasi einen Bypass des Ankerraums 104a für das Hydraulikmedium dar. Somit kann Hydraulikmedium vom Hydraulikeingang 102 zum Hydraulikausgang 103 nicht nur im Ankerraum 104a entlang des Ankers 105 transportiert werden, sondern kann am Anker 105 vorbei durch die Hydraulikkanäle 131 transportiert werden. Somit kann Hydraulikmedium schneller vom Hydraulikeingang 102 zum Hydraulikausgang 103 transportiert werden, ohne dass eine Dämpfungswirkung entsteht.

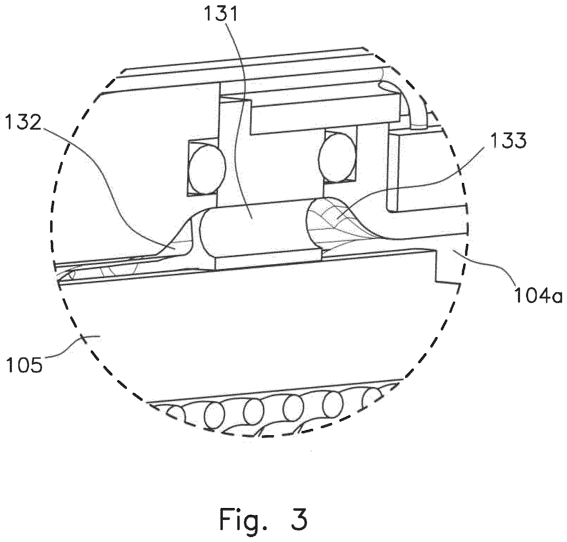

Wie sich den Darstellungen der Fig. 2 und 3 entnehmen lässt, weisen die Hydraulikkanäle 131 Leitungsabschnitte 132, 133 auf, die sowohl in den Ankerraum 104a als auch in die Durchgangsöffnungen 130 münden und in einer Gehäusewandung 134 ausgebildet sind. Insbesondere sind die Hydraulikkanäle 131 im Bereich der Innenwand 118 angeordnet, nämlich an der Stelle, an der ein besonders kleiner Luftspalt zwischen dem Gehäuse 101 und dem Anker 106 realisiert werden muss.

## Patentansprüche

1. Aktuator (100) für ein ABS-System, insbesondere für ein Zweirad, mit einem zumindest bereichsweise ferromagnetischen Gehäuse (101), in dem ein Anker (105) in einem ein Hydraulikmedium aufweisenden Ankerraum (104a) bewegbar angeordnet ist, **dadurch gekennzeichnet, dass** zusätzlich zum Ankerraum (104a) und außerhalb des Ankers (105) zumindest ein Hydraulikkanal (131) vorgesehen ist, der einen Hydraulikmediumtransport am Anker (105) vorbei erlaubt.

2. Aktuator nach Anspruch 1, **dadurch gekennzeichnet, dass** der Hydraulikkanal (131) zumindest abschnittsweise parallel zum Ankerraum (104a) verläuft.

3. Aktuator nach einem der vorhergehenden Ansprüche, **dadurch gekennzeichnet, dass** der Hydraulikkanal (131) zumindest abschnittsweise in einer Gehäusewandung (134) verläuft.

4. Aktuator nach einem der vorhergehenden Ansprüche, **dadurch gekennzeichnet, dass** eine ferromagnetische Innenwand (118) mit einer Durchgangsöffnung für den Anker (105) vorgesehen ist.

5. Aktuator nach einem der vorhergehenden Ansprüche, **dadurch gekennzeichnet, dass** der Hydraulikkanal (131) im Bereich der Innenwand (118) angeordnet ist.

6. Aktuator nach einem der Ansprüche 4 oder 5, **dadurch gekennzeichnet, dass** die Innenwand (118) zumindest eine weitere Durchgangsöffnung (130) aufweist, die zumindest einen Abschnitt des Hydraulikkanals (131) darstellt.

7. Aktuator nach einem der vorhergehenden Ansprüche, **dadurch gekennzeichnet, dass** die Innenwand (118) mehrere, insbesondere gleichmäßig verteilte, Durchgangsöffnungen (130) aufweist.

8. Aktuator nach einem der vorhergehenden Ansprüche, **dadurch gekennzeichnet, dass** der Hydraulikkanal (131) Leitungsabschnitte (132, 133) aufweist, die in den Ankerraum (104a) münden.

9. Aktuator nach einem der vorhergehenden Ansprüche, **dadurch gekennzeichnet, dass** die Leitungsabschnitte (132, 133) beidseits der Innenwand (118) in den Ankerraum (104a) münden.

10. Aktuator nach einem der vorhergehenden Ansprüche, **dadurch gekennzeichnet, dass** der Anker (105) im Ankerraum (104a) mit Führungsspiel angeordnet ist.

11. Aktuator nach einem der vorhergehenden Ansprüche, **dadurch gekennzeichnet, dass** der Anker (105) im Ankerraum (104a) von Hydraulikmedium umspült ist.

12. Aktuator nach einem der vorhergehenden Ansprüche, **dadurch gekennzeichnet, dass** der Anker (105) zumindest eine sich vorzugsweise in Längsrichtung des Ankers erstreckende Durchgangsöffnung aufweist, die einen zusätzlichen Hydraulikkanal darstellt.

13. Aktuator nach einem der vorhergehenden Ansprüche, **dadurch gekennzeichnet, dass** der Anker (105) zumindest eine Hydraulikfluidausnehmung, einen polygonförmigen Querschnitt und/oder Abflachungen aufweist, insbesondere an seiner Mantelfläche zumindest eine sich in Längsrichtung des Ankers oder wendelförmig erstreckende Rille aufweist.
